# EUROPEAN PATENT APPLICATION

(11) **EP 2 690 342 A2**
(43) Date of publication of application: **29.01.2014**
(21) Application number: 13466014.1
(22) Date of filing: 24.07.2013
(51) Int. Cl.: F16N 13/16

(54) **Lubricating device and a method of lubrication**

(30) Priority: 24.07.2012 CZ 20120507
(71) Applicant: Brabec, Emil, 407 47 Varnsdorf (CZ)
(72) Inventor: Brabec, Emil, 407 47 Varnsdorf (CZ)
(74) Representative: Pavlica, Tomas

(57) **Abstract**

The fluid dosing device, especially for lubricants in total loss central lubrication systems, working on the basis of alternation of the working pressure and relief in the main distribution lines (H1, H2), containing a source of compressed air, control valves (R1, R2), dosed fluid tank (Z), one dosing unit (DJ) with differential dosing piston (D), integrated in the dosing device (DD), connected via one main pipe (H1) to the delivered fluid tank (T) and the second main line (H2) to the compressed air distribution system.

The method of dosing fluids comprises steps of filing a dosing chamber with the fluid during a first phase while simultaneously pushing the piston of the dosing chamber by feeding the fluid into an auxiliary control chamber and preventing an escape of the fluid from the dosing chamber to lubrication points, followed by a second step in which a pressure on the piston is applied to discharge the fluid from the dosing chamber to the lubrication points and simultaneously preventing an escape of the fluid from the dosing chamber to the auxiliary control chamber.

## Description

### Technical field

The invention relates to a fluid dosing device, preferably for dosing of lubricants in total loss central lubrication systems and most preferably for dosing of lubricants in total loss central lubrication systems containing tens, hundreds, but even thousands of lubrication points, whereby each lubrication point is usually assigned one dosing unit.

### Background Art

Central lubrication systems are systems where the lubricant is distributed from a central lubricant source to individual lubrication points. Central lubrication systems are usually classified according to several aspects. According to a method of usage of the lubricant at the lubrication point, the central lubrication systems are divided into total loss systems and circulatory systems. According to the type of lubricant used, they are divided into oil systems and grease systems and from the viewpoint of the process of preparation of the individual lubricant doses they are divided into single-pipe, two-pipe or multi-pipe systems.

In principle, the central lubricating systems consist of a pressure source, lubricant tank, dosing devices, control and management system and accessories (pipes, hoses, valves, filters, manometers, screwed fittings, etc.).

The task of the total loss central lubrication systems is controlled feeding of a small dose of lubricating oil or fluid plastic grease to the individual lubrication points. Currently, both single-pipe and two-pipe dosing devices are used for this purpose. In rare cases, so-called, progressive central lubrication dosing devices are also used, which are quite complicated pieces of equipment, where the dosing devices are connected in series to increase the pressure and they are activated one after the other.

To ensure delivery of the correct lubricant dose to the lubrication point in the case of a central lubrication system, the internal arrangement and functions of the lubricant dosing devices used are very important. The lubricant dosing devices currently in use usually contain tens, hundreds and thousands of dosing units, each with one delivery piston. In terms of correct function of the dosing device, it each with one delivery piston. In terms of correct function of the dosing device, it is necessary in the case of total loss lubrication systems to ensure alternation of working pressure, whereby the lubricant is under pressure expelled from the dosing unit to the lubrication point, and relieving pressure of the oil or liquid plastic grease, whereby the lubricant is fed to the dosing chamber. If the lubricant is delivered to the dosing device by a single pipe lubrication system, it is necessary to ensure this alternation of pressure in one main pipe; for two pipe lubrication systems, it is then necessary to ensure this alternation of working and relieving pressure in the two main pipes, via which the lubricant is delivered to the dosing device. This alternation of pressures in the main pipe is done, for instance, by means of valves, etc.

The lubrication cycle thus comprises two phases, the pressure phase when the lubricant is expelled from the dosing device and delivered to the lubrication point by the pressure of the lubricant in the main pipe, i.e. working pressure, and the relief phase when the lubricant is fed to the dosing device, so that it is subsequently expelled in a new dose. During the pressure phase, i.e. working phase, of the lubrication cycle, the dosing piston is activated by the pressure of the lubricant from the main pipe, whereby the lubricant fed to the dosing chamber in the preceding phase is expelled from this dosing chamber and delivered to the lubrication point. During the relief phase, the pressure that acts on the piston in the preceding expulsion phase is reduced so that this piston expels the lubricant from the dosing chamber and delivers it to the lubrication point, and new lubricant is fed from the main pipe to the dosing chamber of the dosing device, whereby the delivery piston in the dosing device during this filling process reverses its direction of motion.

In simple terms, it is possible to compare the dosing device to a pump. For a one pipe dosing device, the reverse motion of the delivery piston is triggered by a spring, whereby the pressure generated by this spring must be greater than the relief pressure in the main pipe, whereas during the reverse motion of the delivery piston, new liquid, lubricant, is fed to the dosing chamber from the pressure relieved main pipe. For two pipe dosing devices, the delivery piston is reversed by the pressure of the lubricant delivered from the second main pipe. The two pipe dosing devices currently in use are in principle a hybrid of two single pipe units, but without a spring, which are integrated into a single unit. The two pipe dosing unit has two dosing chambers with a common piston and two outputs to the lubricating points, where during the first impulse, the dosing piston expels the lubricant from one dosing chamber to one lubricating point, while the second dosing chamber is filled with lubricant; during the second impulse, the backward motion of the dosing piston expels the lubricant to the second output to the lubricated point and the first chamber is filled with lubricant.

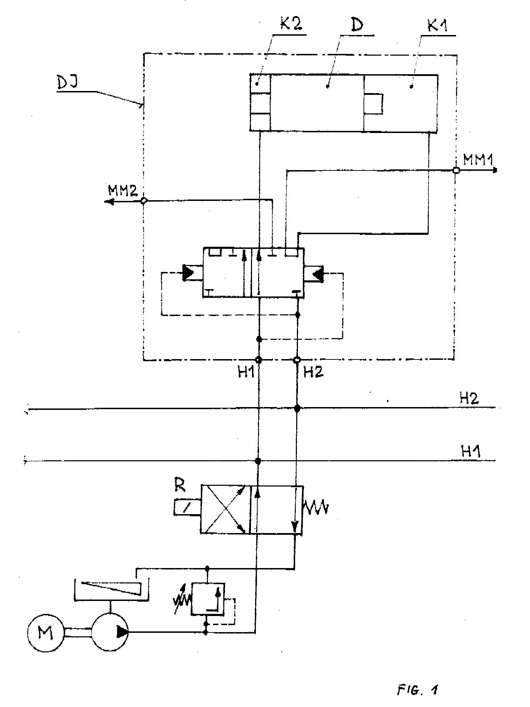

The internal arrangement of the existing dosing units of two pipe lubrication systems is best captured by Figure 1 in the section "Overview of figures in the drawings". Dosing unit DJ comprises one delivery piston D, two dosing chambers (lubricant tanks) K1, K2, two position hydraulically controlled slide valve four-way distributor with two inlets H1, H2 and two outlets to lubrication points MM1, MM2.

The feeding of lubricant to the dosing chamber of the two pipe dosing device, motion of the pistons and discharge from the dosing device is controlled by two position slide valve distributors integrated in the body of the dosing device. The slide valve of the distributor is activated by the pressure action of the fed lubricant. Each dosing piston has one control slide-valve distributor and two chambers with integrated function, positioned in the face of the dosing piston. During first impulse of the lubricating cycle, one chamber has the control and filling function and the other chamber has the discharge function, during the second cycle, they mutually switch functions. The lubrication cycle comprises two impulses, in which working pressure in one main pipe and pressure relief in the other main pipe are alternately induced. During the first impulse, the dosing pistons expel the lubricant from half of all the dosing chambers and deliver it to the connected lubricating points and simultaneously the lubricant dose for the second impulse is fed to the opposite dosing chamber. At the next impulse, the dosing pistons move in the opposite direction and expel the lubricant that is in front of the piston to the second half of the lubricated points. At the same time, lubricant is taken in for the next, so-called, first impulse.

Changes in the working and relief pressure in both main pipes whereby these pressures are alternated between the main pipes, such that one of the pipes always carries the working pressure ensuring the lubrication action and the second carries the relief pressure, which is close to zero, in order to ensure that the piston reverses its motion with ease, without the need for any counter-pressure from the controlling side, and fill the dosing chamber with liquid-lubricant, and vice-versa, is in the simplest cases ensured by means of standard electromagnetic distributors, and for higher lubricant pressures in the main pipe by means of electric motor distributors.

The high reliability of two-piston dosing devices predetermines them for the most intensive applications. But the pressure filling of the lubricant into the dosing chambers is in the case of the existing two-pipe dosing devices economically more expensive, and for this reason, it is used only where doubts exist concerning the reliability of the substantially cheaper single-pipe dosing devices, which fail when using high viscosity or plastic lubricants. This mainly concerns the lubrication of expensive machinery, where the requirement for lubrication with plastic lubricants is in place. The two-pipe dosing devices also prove their high reliability also in heavy-duty lubrication of machinery, e.g. in mines, smelting works, electric power plants, cement works, sugar factories, etc. In these cases, the substantially long high-pressure pipe that connects the source of the lubricant to the dosing device is typical, also the long distances between the individual lubrication points.

For the lubrication systems, it is logically necessary to select such working pressure, respectively, control pressure for the delivery action of the dosing piston, so that the dosing piston overcomes even the highest counter-pressure of the lubricating point acting against the lubricant from the dosing device. To overcome the long lubricant transport distances, inner resistance of the dosing device and highest counter-pressure of the lubricated point, it is necessary to generate a working pressure in the main pipe that exceeds all these resistances. In simple terms, we can say that the main advantage of the two pipe total loss central lubrication systems as compared with one pipe systems is high reliability also when using plastic lubricants, which are fed to the dosing chambers under pressure. The disadvantage of the two pipe total loss central lubrication systems known to date is the high acquisition cost of the high-pressure source and transportation of the lubricant under high pressure over long distances. In extreme cases, the total resistances of the main pipe, internal resistances of the dosing devices and highest counter-pressure of the lubricated points may be up to 40 MPa.

Although from the commercial viewpoint, besides the capabilities of the system to overcome high counter-pressures of the lubrication points, the possibility to connect lubrication points in the order of hundreds to the lubrication system is also praised; but in actual fact this is a necessity for economic reasons. The capability of the lubrication system to overcome such high counter-pressures of the lubricated points is certainly a great advantage, but the question is at what price. In order to generate high pressures for plastic lubricants, it is not possible to use standard gear pumps; a problem is moreover also the reversal (change) of working and relief pressures between the main pipes, whereby it is necessary to use an expensive special distributor, which is capable of working at this high pressure. All this leads to the fact that a very expensive special high-pressure piston pump is used in these lubrication systems, to which a pair of main pipes are usually connected and to which, in turn, several hundreds of dosing devices are connected. In consequence of this, it is not possible to divide the lubricating points, for instance, into several groups with varying lubrication intervals and lubricate them independent of each other.

For total loss central lubrication systems known to date, it is characteristic that the working pressure, respectively, control pressure necessary to move the dosing piston in the direction of its extrusion motion is higher than the pressure of the lubricant delivered from the dosing chamber. From the economic viewpoint, this fact has a negative impact, mainly, in two pipe lubrication systems.

Patent US 4157132 describes the solution of a dosing unit with a differential piston to increase the lubricating pressure, in order to ensure that it is not necessary to control the piston using a pressure that is greater than the pressure of the lubrication point. This solution comprises four pipes, one for transport of lubricant to the dosing device, one for delivery of the lubricant from the dosing device to the lubrication point, one for control of the piston and one for expulsion of the excessive lubricant from the blind area of the differential piston. Due to the complexity of the dosing device and in consequence of this installation intensity, this solution is however not suitable for total loss central lubrication systems with a larger number of dosing devices because it would require the connection of a hydraulically controlled valve to each dosing device for closure of the outlet from the dosing unit, which would be demanding in terms of production and functionally sensitive; moreover, it is an element that is complicated to integrate from the viewpoint of the assembly space. A further disadvantage of this solution is also the necessity to bleed the finger space between the differential piston and its line.

### Summary of the invention

This invention offers a new method for dosing of fluids, mainly lubricants in central lubrication systems and new equipment for dosing of fluids, applicable mainly in total loss central lubrication systems. The objective of this invention is at least to retain or even increase the capability to overcome very high counter-pressures at the outlet point of the dosed fluid, without the need to use such high pressure in the main pipe for control of the dosing device. According to one aspect of this invention, a new dosing device solution is provided, whereby the delivery piston in the existing dosing device is replaced by a differential delivery piston, which also makes it possible multiple increase of the pressure of the fluid expelled from the dosing device. At the same time, the separation of the process of filling the dosing chamber with fluid from the process of expulsion of the lubricant from the dosing chamber is attained. It is thus possible to abandon the design that integrates two dosing devices into one device and to replace the existing, costly production and functionally sensitive, two position slide-valve four-way distributor. According to another aspect of this invention, a new solution is provided for filling the dosing chamber with fluid.

In case it is ensured that the pressure of the intake fluid entering the dosing chamber during the filling process is lower than the counter-pressure, acting against its discharge from the dosing device, it is possible to supply the fluid under pressure to the dosing chamber via a one-way valve (not as it is done currently via a slidewalve distributor), and to use a simpler design, easier to manufacture safety /relief/ valve on the fluid outlet from the dosing unit. The collection points of the dosing fluid with a high counter-pressure naturally fulfil this assumption; here, it is not necessary to intervene in any way - we need not control the transfer of the fluid from the dosing chamber to these points. In order to avoid uncontrolled flow of the fluid toward the collection points with a lower counter-pressure in course of the filling impulse, it is necessary to adjust the ratio of the pressure of the fluid entering the dosing chamber against this low counter-pressure of the collection point - reduce it. In principle, this can be done either by increasing the resistance at output of the dosing device, or reduction of the pressure of the fluid entering the dosing chamber.

Use of dosing devices according to the invention in the total loss central lubrication systems makes it possible to reduce the working pressure in the main pipe, which in the case of the two-pipe systems assumes replacement of the expensive high-pressure piston pumps and high-pressure distributors with substantially cheaper designs. It is not possible to even ignore the fact that replacement of the slide-valve distributor with a pair of valves - a one-way valve and a safety valve - simplifies the production of the dosing devices and reduces their installation space intensity, all in spite of the fact that a differential piston shall be used. Is it possible to assume that the application of the invention, for instance, in the area of lubrication technology, the economic aspect will no longer hinder the use of the more reliable two pipe lubrication systems also for standard machinery, moreover, with an option to divide the lubrication points into several groups with varying, mutually independent lubrication intervals.

The term lubricant has always been used in the description given above. But, it is evident that it is possible to use a dosing device according to the invention also for dosing of other fluids, mainly, where it is necessary to deliver these fluids in smaller doses and under high pressure.

The following features are characteristic of the dosing devices according to the invention:
- interconnection of the auxiliary working chamber X, used to control the motion of piston D during filling of lubricant into dosing chamber K, and the dosing chamber, containing the discharge fluid dose with check valve V1, which makes it possible to move the lubricant into dosing chamber K during filling, but which closes during the lubricant discharge phase and does not allow reverse flow of the lubricant, during application of a differential piston makes it possible to easily use both entirely differentially divided piston surfaces, makes possible the variability of the positioning of the dosing chamber either in the finger area, created between the outer diameter of the piston and the inner diameter of the differentially divided piston.
- option for variable positioning of a compression dosing chamber from the face of the part of the differential piston with a smaller diameter or to the area of the finger intermediate ring between this part of the piston and the part of the piston with the largest diameter.

### Brief Description of the Drawings

The invention is explained in greater detail by means of examples elaborated in the drawing, where:
Figure 1 shows the hydraulic diagram of the connection of the existing two pipe dosing device with one dosing unit DJ to the central lubrication system, which is described in the section "Current state of the technology".

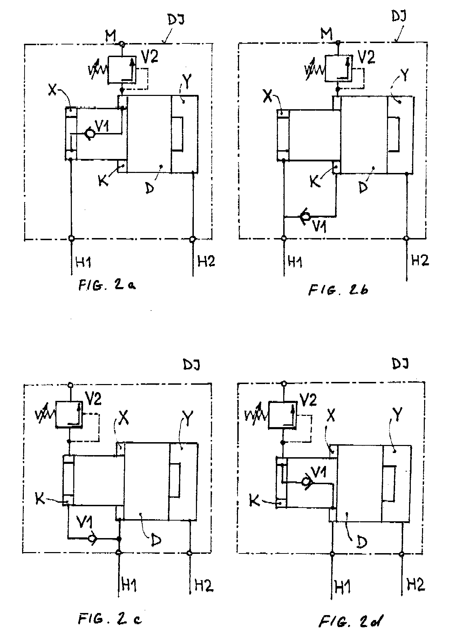

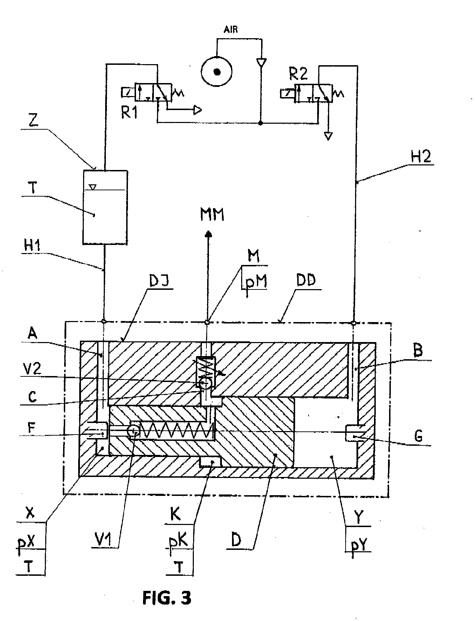

Figures 2a to d show the various designs of the dosing device according to this technical solution, where Figure 2a shows the solution further demonstrated in Figure 3, Figure 2b shows the design from Figure 2a with a different connection of the dosing chamber with inlet for dosing fluid fed to the dosing device, Figure 2c then shows the solution in which the dosing chamber comprising the central part of the differential piston surface with smaller diameter and Figure 2d shows a solution similar to the variant from Figure 2c, but with different interconnection of the dosing chamber with inlet for dosing fluid to the dosing unit;
Figure 3 shows the sectional diagram of the two pipe fluid dosing device from
Figure 2a with one dosing unit with differential delivery piston, in which the differential piston is controlled by the pressure (working pressure) of compressed air,

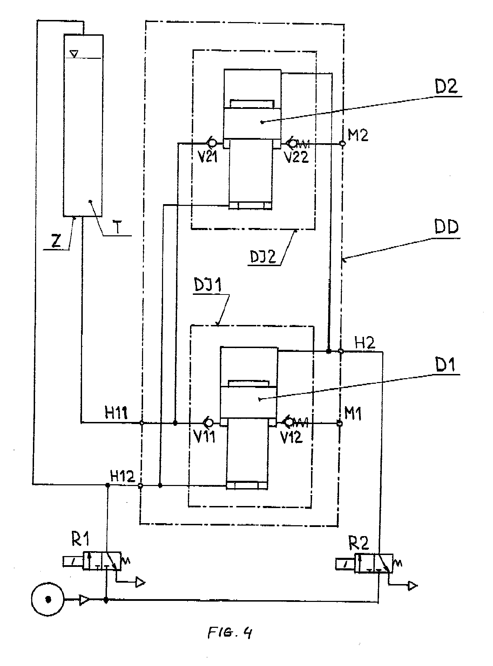

Figure 4 shows the diagram of a two-pipe fluid dosing device similar to the solution in Figure 2a, but with two dosing units and a differential dosing piston, controlled by compressed air,

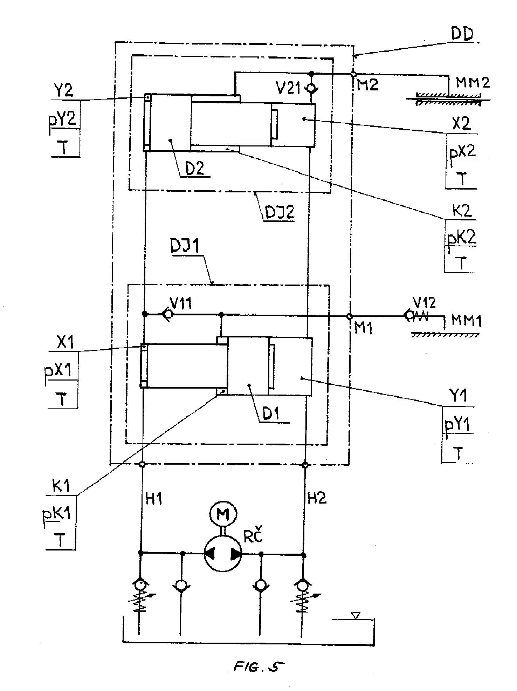

Figure 5 shows the diagram of a two-pipe dosing device that together with the connected reversible gear pump and a pair of main lines makes up a simple hydraulic circuit with two lubricating points,

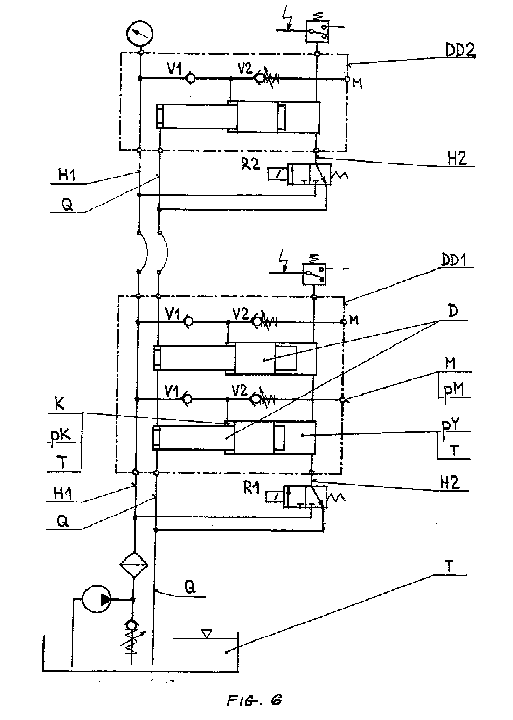

Figure 6 shows the diagram of the simplified hydraulic lubrication circuit with two dosing devices, controlled independent of each other, and

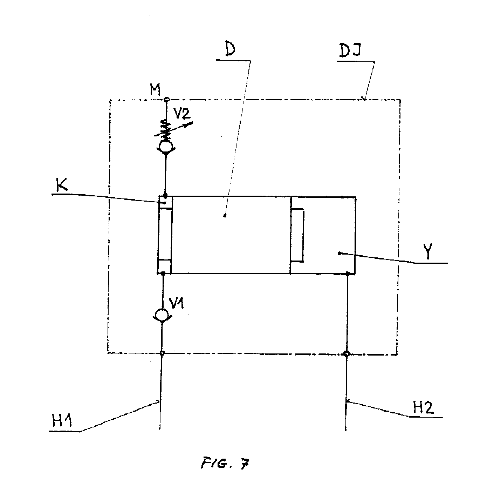

Figure 7 shows a dosing unit with simple delivery piston with filling and emptying of the dosing chamber according another aspect of this invention.

### Detailed Description of the Embodiments

Figures 2a to 2d show two variants for location of dosing chamber K in the dosing unit and two variants for interconnection of dosing chamber K with inlet area X via check valve V1.

Figures 2a and 2b show the dosing chamber located in the finger area between the differential piston and its line, Figures 2c and 2d show the dosing chamber located in the face of the smaller diameter of the differential piston. Check-valve V1 can be located directly in the delivery piston (Figures 2a and 2d) or outside it (Figures 2b and 2c).

During the filling tact (phase), we feed pressured fluid via the main line H1 to the inlet auxiliary working chamber X, whereby the action of the pressure energy of this fluid moves the delivery piston to the second position. From a control chamber Y for control of the working motion of the delivery piston, the control medium is pushed into pressure relieved main line H2 and the dosing fluid is fed by valve V1 to dosing chamber K. The safety -relief- valve V2 is set in such a way that during the filling process the chamber does not open and the fluid does not escape to the connected delivery point of the dosing fluid, e.g. lubricant to the lubrication point.

During the second - expulsion tact -phase- the pressure medium is fed to the control chamber Y for control of the working motion of the dosing piston from the main line, which acts on the delivery piston and moves it to a starting position, and using the differentially increased pressure, we push the dosed fluid via safety valve V2 toward the connected delivery point of the dosing fluid.

Figure 3 in the sectional diagram shows the two-pipe fluid dosing device DD with one dosing unit DJ with differential dosing piston D, connected via the main pipe H1 to the fluid tank Z. An alternating compressed air pressure, controlled by means of a three-way two-position valve R1, acts on the surface of the fluid T in tank Z. Through the second main branch H2, the two-pipe fluid dosing device DD is connected to a distribution system of compressed air.

The working cycle of the dosing equipment according to this invention comprises two working periods -phases, during one of them the delivery piston D is pushed to a second position and the dosing chamber K is filled, the volume of which is increased by a motion of the piston D until it reaches the volume of the assumed fluid dose, which should be delivered by the dosing device to the lubrication pipe of the "expanding" dosing chamber K with fluid T from the main pipe H1. During the second discharge working period -phase, the delivery piston D is pushed back to its initial position and simultaneously the delivery chamber K is compressed and the fluid T is discharged via valve V2 toward outlet M from dosing device DD.

The dosing unit DJ consists of a canal A connected to the main pipe H1, for a supply of a fluid from the tank Z, that terminates in the inlet and control chamber X in dosing unit DJ, a canal B that terminates in the control chamber Y, a dosing chamber K, of the differential dosing piston P with stoppers F, G , and an exit canal C from one side exiting into dosing chamber K and the second side toward exit point M.

The control and input chamber X is interconnected via a one-way valve check valve V1 with the dosing chamber K. This check valve V1 makes it possible during the filling tact for the fluid I to enter the dosing chamber K and during the discharge tact, on the contrary, prevents the undesirable escape of fluid back to the main line H1.

Safety valve V2 is installed in the input canal C, so that its hydraulic resistance increases the counter-pressure of delivery point Pm and prevents the uncontrolled flow of fluid T from the dosing chamber during the filling tact.

The first phase starts with opening of the three-way two position valve R1 and supply of compressed air; we assume a pressure of, for instance, 0.8 MPa, acting on the surface of fluid T in tank Z. Fluid I may be naturally separated from the compressed air, e.g. by means of a membrane or floating piston. Valve R2 at rest at the same time relieves control chamber Y and releases the pressure to the atmosphere. The pressure energy of the fluid pX is transmitted via the main pipe H1 to the inlet and control chamber X and by its action, e.g. 0.6 MPa less the pressure loss, moves the differential dosing piston D to the right terminal position against stop G, whereas the negative pressure generated in dosing chamber K is immediately equalized by overpressure pX in the inlet and control chamber X. Let us assume that counter-pressure pM of the delivery point MM at point M is relatively low, e.g. 0.4 MPa, and the pressure of the fluid entering chamber pK is 0.5 MPa. In this case, we must set safety valve V2 at a value above 0.1 MPa, which means that this valve will open only after rise of pressure above 0.1 MPa. In this first tact, fluid T is fed to dosing chamber K.

During the second phase, the valve R1 is at rest and releases chamber Z to the atmosphere. The valve R2 is simultaneously opened and via the main pipe H2 connects the compressed air supply, having an assumed pressure of 6 bar, to the input and control chamber Y. Through the pressure action of compressed air pY (6 bar), differential dosing piston D is pushed to the left terminal position against stop F and fluid T is expelled from dosing chamber K toward the off-take point of expelled fluid M (via valve V2 set to 1 bar). Fluid I in the input and control chamber X is at the same time pushed back into the pressure relieved tank Z via the main pipe H1. The check valve V1, in this case, being integrated directly in the differential delivery piston D, during this discharge phase prevents the reverse flow of the fluid T from the dosing chamber to the inlet and control chamber X.

Let us assume that the differential piston has a transfer ratio of, e.g. 5:1, which is also convenient from the viewpoint of demand for installation space. Ignoring the inner pressure loss of the dosing device and leaving the setting of safety valve V2 at 1 bar, it is possible to connect the delivery point with a theoretical counter-pressure of up to 2.9 MPa to the dosing device.

Figure 4 shows a diagram demonstrating a similar case of the two-pipe fluid dosing device DD with two dosing units DJ1 and DJ2 with differential dosing pistons D1 and D2, connected via the main pipe H11 to the fluid tank Z and the auxiliary main pipe H12. The alternating compressed air pressure, controlled by valve R1, acts on the surface of fluid T. Through the second main pipe H2, the two-pipe fluid dosing device DD is connected to the compressed air distribution system.

The functional activity is similar to that in the previous design shown in Figure 1 with the difference that the motion of fluid T from tank Z to the dosing device is in one direction.

Figure 5 shows the diagram of another example of the design of two-pipe dosing device DD according to the invention, connected via main pipes H1 and H2 to the reversible gear pump RC and that together form a simple hydraulic lubricating circuit. We assume that lubricated point MM1 at connecting point M1 to the dosing device acts by itself (without any additional valve V12) against delivery of lubricant only at atmospheric pressure and on the contrary lubrication point MM2 at the point of connection to dosing device M2 acts with high counter-pressure, e.g. 20 MPa.

The functions of the dosing units DJ1 and DJ2, being integrated in the two-pipe dosing device DD, is similar to that in the previous example according to Figure 1; the basic elements comprising both dosing units DJ1 and DJ2 are also the same. The mutual position of the dosing units DJ1 and DJ2 is selected purely for demonstration so that the possibility to divide the lubricating points into two groups with a reversed cycle is clear at first glance, for instance, that one group of lubricating points will be lubricated upon the first impulse and the second group upon the second impulse. At the same time, the selected combination of inner and outer arrangement of reverse valves V11, V12 and V21 shows the variability of the options offered by the design of dosing device DD according to the invention.

Upon first impulse of the lubricating cycle, the reversible gear pump RC via main pipe H1 delivers pressurised lubricating fluid T to the input and control chambers X1 and Y2 and vice-versa via the main pipe H2 relieves the input and control chambers Y1 and X2. Differential delivery piston D1 acts via control pressure pX1 on the suction stroke, in which dosing chamber K1 via valve V11 is filled with pressured lubricating fluid T from input and control chamber X1. In order to prevent uncontrolled flow of the lubricant supplied to lubricating point MM1 (with almost zero resistance), it is necessary to increase its counter-pressure with hydraulic resistance, e.g. safety valve V12; for demonstration it is placed outside the dosing device. Excess lubricating fluid T in the input and control chamber Y1 is expelled by the differential dosing piston D1 into the pressure relieved main pipe H2, respectively, intake of reversible gear pump RC.

At the same time, the differential dosing piston D2 by action of control pressure pY2 during this first impulse performs the delivery stroke, in which it expels the lubricating fluid T from the dosing device to the lubricating point MM2. Simultaneously during this delivery motion, the differential dosing piston D2 expels the excess fluid T from the input and control chamber X2 to the pressure relieved main pipe H2, respectively, into the intake of the reversible gear pump RC.

During the second impulse, by change of the rotation speed of the reversible gear pump RC, we redistribute the working pressure and pressure relief between the main pipes H1 and H2. Main pipe H2 is now under pressure and main pipe H1 is relieved. Differential dosing piston D1 performs the delivery stroke and differential dosing piston D2 performs the intake stroke. Because lubricating point MM2 has very high resistance against the delivered fluid at the point of connection to dosing device M2, it is not necessary to artificially increase its counter-pressure; in this case, the safety valve can be set at minimum value.

Usage of the reversible gear pump for the two-pipe systems solves the issue of redistribution (reversing) of the working pressure and pressure relief between the main distribution lines without the necessity to use any distributor.

Figure 6 shows the diagram of a simplified hydraulic circuit of the lubrication with two dosing devices DD1 and DD2 with the differential dosing pistons D, connected via main pipe H1 to the pressure-fed lubricant I and via the second main pipe H2 to the control valves R1 and R2.

Both dosing devices are controlled independent of each other; having in common only the first filling phase, which is triggered by starting the pump. In this phase, all the dosing pistons D, by action of pressure-fed fluid T, delivered to all the dosing chambers K, move to the right terminal position, if they are not already in this position. All the dosing chambers are filled at the same time with the pressure-fed lubricant. Valves V2, together with counter-pressure pM of the concerned lubricated point connected to the dosing device at point M, function as bypass valves, set at a higher pressure than the pressure in the main pipe H1*.*

For simplification, let us assume that a lubrication point having a counter-pressure pM = 30 MPa is connected only to one point M and lubrication points with counter-pressure pM = 2 MPa are connected to the rest of the points, the pressure of the lubricant entering the dosing chamber pK = 6 MPa and the inner pressure loss of the dosing unit = 0 MPa. In the case of dosing unit having a counter-pressure of the connected lubrication point of 30 MPa, the valve V2 can be set at the minimum pressure resistance, approx. 0 MPa. The pressure resistance of the rest of the valves is set at 3 MPa. In order to overcome the highest counter-pressure acting on the lubrication point, in this case, the differential transfer ratio of the delivery piston is 5:1. The pressure relief of the dosing unit is released to pipe Q with atmospheric counter-pressure.

During this first phase, the control valves R1 and R2 are at rest and relieve the main pipe H2, through which excess fluid is fed to the waste pipe Q that is in the right front of the dosing piston.

The second delivery phase is executed by activating the electromagnetic valve R1, respectively, R2, with simultaneous run of the pump and via the main pipe H2 the control pressure pY can be brought to the concerned dosing device DD1, respectively, DD2; control pressure pY shifts all the differential dosing piston D, which are in the activated dosing devices. The pressure in dosing chamber K of the concerned dosing piston is higher than control pressure pY, respectively, it is its multiple, and thus playfully overcomes the counter-pressure of valve V2 and expels the fluid to the lubricated point.

From the examples given in figures 2 to 6, it can be summarised that the inner arrangement and functions of the dosing fluid DD in accordance with the invention it is possible, in the hydraulic systems, to reduce the working pressure in the main pipe H, while retaining the capability of overcoming the high counter-pressures of the lubricated points. Dosing units DJ in design according to the invention are essentialy pressure-filled differential pumps, controlled in both directions by the pressure of the fluid, by the pressure of the compressed air or by the pressure of the spring. Other variants may also come under consideration, where the dosing chamber shall be located in the area on the side of the smaller diameter of the differential piston and the delivered fluid will, for instance, be plastic lubricant and the control medium will be hydraulic oil, etc.

Figure 7 shows the design of the dosing unit for fluid delivery points with a low counter-pressure, in the order of only tenths of MPa, where it is not necessary to use the action of the differential piston to discharge the fluid from the dosing chamber. In such case, only a simple delivery piston suffices.

During the filling phase, the dosing fluid is fed under low pressure through the main line H2 to the dosing chamber K via valve V1. The safety valve is set in such a way that it does not open during this tact.

During the delivery phase, the pressure medium is fed to the control chamber Y for control of the working action of the delivery piston from the main line H2, which pushes the delivery piston D to initial position and pushes the dosing fluid via safety valve V2 toward the connected delivery point. In order to open the safety valve within this phase, the pressure of the control medium must be higher than the total pressure resistances of valve V2 and the dosing fluid delivery point.

For the design of the dosing unit according to the invention, the use of a safety valve on the lubricant discharge side from the dosing device is characteristic, also the interconnection of the dosing chamber via a check-valve with the inlet of the lubrication fluid to the dosing unit.

## Claims

1. Fluid dosing equipment, especially for total loss central lubrication systems, comprising at least one source of pressure connected to at least one main pipe (H) supplying this fluid to at least one fluid dosing device (DD), which has at least one dosing unit (DJ) with a body comprising a dosing chamber and differential delivery piston (D), whereby the dosing device works on the principle of alternation of working and relief pressure,
**is characterized in that** at least one dosing unit (DJ) has an auxiliary working chamber for control of piston motion from one position to another, where such working chamber is connected to the compression chamber, whereas this arrangement includes a check valve and pressure resistance at the outlet from the dosing chamber is greater than the filling pressure of the fluid to the dosing compression chamber, but less than the working pressure used to expel the fluid from the dosing compression chamber.

2. Fluid dosing device according to claim 1, **characterized in that** the counter-pressure of the off-take points (MM) is increased by a hydraulic element with hydraulic resistance (V2), at best a valve with bypass function, integrated in the line for expulsion of the dosed fluid (T) from the dosing chamber (K).

3. Fluid dosing device according to claim 1 or 2, **characterized in that** the hydraulic element (V2) increasing the pressure of the off-take point (MM) is arranged in the outlet canal (C) extending from the dosing chamber (K), or outside the dosing unit (DJ), advantageously into the pipe extending to the off-take point (MM).

4. The fluid dosing device according to at least one of the claims 1 to 3, **characterized in that** the motion of the differential dosing piston (D), at least in one of its directions (F, G), is controlled by a pressure of compressed gas medium or by a pressure of a fluid medium, the composition of this fluid medium being different from the dosed fluid, or by a pressure of the dosed fluid.

5. Fluid dosing device, according to at least one of the claims 1 to 4, **characterized in that** it contains a pair of main lines (H1, H2) wherein the working and relief pressure as well as its change is provided by a reversible gear pump.

6. Method of dosing fluids, especially lubricants in total loss central lubrication systems, having a first phase during which a dosing chamber is filled and simultaneously by feeding the fluid into the auxiliary control chamber the pressure of the fluid pushes the piston to a position in which the dosing chamber has its maximum volume, while preventing the fluid to escape from the dosing chamber to lubrication points, followed by a pressing the piston in the dosing chamber for discharging the fluid from the dosing chamber, the fluid being simultaneously prevented from escaping from the dosing chamber to the auxiliary control chamber.
